Europäisches Patentamt

European Patent Office

Office européen des brevets

(19)

(11) Numéro de publication: **0 022 995**
**B1**

(12) **FASCICULE DE BREVET EUROPEEN**

(45) Date de publication du fascicule du brevet: 02.03.83

(51) Int. Cl.³: **H 02 K 3/20, H 02 K 3/52**

(21) Numéro de dépôt: **80104008.0**

(22) Date de dépôt: **11.07.80**

(54) Rotor à écran amortisseur pour alternateur à pôles saillants.

(30) Priorité: **19.07.79 FR 7918711**

(43) Date de publication de la demande:
**28.01.81 Bulletin 81/4**

(45) Mention de la délivrance du brevet:
**02.03.83 Bulletin 83/9**

(84) Etats contractants désignés:
**BE CH DE FR GB IT LI SE**

(56) Documents cités:
**DE - C - 117 033**
**FR - A - 1 270 416**
**FR - A - 1 273 415**
**FR - A - 1 329 891**

(73) Titulaire: **ALSTHOM-ATLANTIQUE Société anonyme dite:**
**38, Avenue Kléber**
**F-75784 Paris Cedex 16 (FR)**

(72) Inventeur: **Allegre, Jean**
**15 Domaine de l'Etang**
**Cravanche F-90000 Belfort (FR)**
Inventeur: **Merouge, Gilbert**
**11, rue des Sapins**
**F-90800 Bavilliers (FR)**
Inventeur: **Ruelle, Gilbert**
**22, rue des Acacias**
**F-90000 Belfort (FR)**

(74) Mandataire: **Weinmiller, Jürgen et al,**
**Zeppelinstrasse 63**
**D-8000 München 80 (DE)**

Courier Press, Leamington Spa, England.

Rotor à écran amortisseur pour alternateur à pôles saillants

La présente invention concerne un rotor à écran amortisseur pour alternateur à pôles saillant radialement, ce rotor comportant

— un axe de rotation longitudinal,

— un circuit magnétique formant des pôles saillants radialement vers l'extérieur, s'étendant longitudinalement, et répartis angulairement autour de l'axe, chaque pôle comportant un noyau polaire et se terminant vers l'extérieur par un épanouissement polaire dont les bords débordent angulairement de part et d'autre des noyaux polaires,

— des enroulements excitateurs autour des noyaux polaires,

— des barreaux amortisseurs constitués d'un matériau bon conducteur électrique et s'étendant longitudinalement sans discontinuité sur toute la longueur des pôles, certain de ces barreaux étant des barreaux amortisseurs interpolaires disposés entre les pôles,

— deux anneaux conducteurs disposés coaxialement au rotor aux deux extrémités de celui-ci et connectés électriquement aux deux extrémités de chacun des barreaux amortisseurs pour constituer avec ces barreaux un écran amortisseur du type cage d'écureuil.

Cette disposition s'applique avantageusement aux alternateurs à basse vitesse, par exemple dans un groupe turbo-alternateur' hydraulique immergé du type bulbe, appelé plus brièvement groupe bulbe.

Un tel groupe fournit une puissance électrique d'au moins 5 MVA, par exemple 40 MVA. Il est disposé dans un bulbe, c'est-à-dire une enceinte profilée étanche, d'axe généralement horizontal, ce bulbe étant lui-même disposé dans l'axe d'une conduite d'eau. Il comporte une turbine dont les aubes mobiles sont propulsées par le flux liquide qui s'écoule tout autour du bulbe, et qui entraîne directement le rotor d'un alternateur disposé dans le bulbe.

Les axes de la conduite d'eau, du bulbe, de la turbine et de l'alternateur sont confondus.

Le circuit magnétique du stator d'un alternateur ou plus brièvement le circuit magnétique stator est constitué par une couronne dont la partie radialement interne comporte des encoches contenant les barres de l'enroulement stator. Le diamètre de ce circuit est toujours limité, notamment, dans le cas d'un groupe bulbe, par le diamètre que l'on peut donner au bulbe qui le contient, le diamètre de l'espace occupé par le rotor ne pouvant généralement pas être choisi supérieur à 5 ou 6 mètres.

La partie mécaniquement résistante de la couronne du circuit magnétique stator, qui est limitée à la zone non affectée par le découpage des encoches, a donc une épaisseur radiale relativement faible (par exemple 10 cm). Son inertie mécanique, et donc sa rigidité, est comparativement beaucoup plus faible que celle d'un alternateur conventionnel. La vitesse de rotation des bulbes étant faible (par exemple moins de 100 ou 120 tours par minute) ces alternateurs possèdent un grand nombre de pôles qui, installés sur un diamètre limité, sont répartis sur la périphérie suivant un pas polaire relativement faible (par exemple 20 à 30 cm).

Pour obtenir aux bornes de la machine une tension très voisine de la forme sinusoidale, il est nécessaire de réaliser l'enroulement de l'induit avec un nombre d'encoches par pôle et phase fractionnaire. Un tel enroulement est très riche en harmoniques d'espace de réaction d'induit, en particulier en sous-harmoniques ayant des périodes spatiales couvrant plusieurs paires de pôles.

De plus le diamètre réduit des groupes conduit à adopter des entrefers beaucoup plus petits que sur les machines classiques pour pouvoir maintenir une induction acceptable dans l'entrefer sans trop accroître le courant d'excitation, compte tenu du petit pas polaire de ces machines. Il en résulte que les harmoniques de denture sont plus importantes sur les machines à faible vitesse que sur les grands alternateurs hydrauliques.

Dans ces conditions, le fait que la faible épaisseur de la couronne du circuit magnétique stator lui donne une résistance à la flexion radiale peu élevée entraîne que les risques de vibration sont importants sous l'effet de l'harmonique de denture ou des nombreux harmoniques de réaction d'induit.

Il convient de noter à ce sujet que les harmoniques de réaction d'induit ont des pas spatiaux et des vitesse de rotation par rapport au rotor très différents les uns des autres. L'harmonique de denture a, vis-à-vis du rotor, une fréquence élevée (8 à 12 fois la fréquence du réseau) et un pas spatial pouvant couvrir plusieurs pôles.

Il résulte de ce qui précède que, quand on cherche à obtenir une grande puissance électrique en sortie d'un alternateur à basse vitesse, les vibrations de la couronne du circuit magnétique stator peuvent atteindre un niveau gênant. Il est connu que dans les alternateurs usuels, les forces d'origine électromagnétique subies par cette couronne sont limitées par la présence d'un enroulement amortisseur disposé à la périphérie du rotor. Cet enroulement est du type cage d'écureuil et est constitué par des barreaux conducteurs longitudineaux, c'est-à-dire parallèles à l'axe et reliant deux anneaux conducteurs disposés aux deux extrémités du rotor. Certains de ces barreaux sont des barreaux "polaires" c'est-à-dire noyés dans la zone externe des épanouissements polaires. Certains autres de ces barreaux peuvent être des barreaux "interpolaires", c'est-à-dire disposés entre les pôles. Un barreau interpolaire 15 est par exemple montré sur la figure 5 du brevet français no 1 475 482 (Moskovoky Energetichesky Institut).

De tels barreaux interpolaires connus sont maintenus contre la force centrifuge par des éléments annexes, par exemple des cales en matière plastique qui s'interposent entre le barreau interpolaire et l'entrefer de l'alternateur et réduisent l'efficacité de l'amortisseur.

Il en résulte notamment que ces dispositions connues ne permettent pas à l'enroulement d'amortir efficacement les harmoniques de flux à fréquence élevée et à pas spatiaux importants, que l'on rencontre dans les alternateurs à basse vitesse et à faible entrefer, et le niveau de vibration peut alors être trop élevé.

La présente invention a pour but la réalisation d'un rotor à écran amortisseur pour alternateur à pôles saillants avec des barreaux amortisseurs interpolaires permettant d'amortir d'une manière particulièrement efficace les harmoniques de flux à fréquence élevée et à pas spatiaux importants.

Elle a pour objet un rotor à écran amortisseur pour alternateur à pôles saillants, ce rotor comportant

— un axe de rotation longitudinal,

— un circuit magnétique comprenant des pôles saillant radialement vers l'extérieur, s'étendant longitudinalement, et répartis angulairement autour de l'axe, chaque pôle comportant un noyau polaire et se terminant vers l'extérieur par un épanouissement polaire, dont les bords débordent angulairement de part et d'autre des noyaux polaires,

— des enroulements excitateurs autour des noyaux polaires,

— des barreaux amortisseurs constitués d'un matériau bon conducteur électrique et s'étendant longitudinalement sans discontinuité sur toute la longueur des pôles, certains de ces barreaux étant des barreaux amortisseurs interpolaires disposés entre les pôles,

— deux anneaux conducteurs disposés coaxialement au rotor aux deux extrémités de celui-ci, et connectés électriquement aux deux extrémités de chacun des barreaux amortisseurs pour constituer avec des barreaux un écran amortisseur du type cage d'écureuil,

— ce rotor étant caractérisé par le fait que les barreaux interpolaires comportent

— des semelles s'appuyant contre les faces intérieures des bords des épanouissements polaires

— et des ailes en continuité avec les semelles et s'étendant sur plus de la moitié de l'intervalle radial occupé par les épanouissements polaires voisins.

Cette disposition permet d'amortir efficacement des harmoniques de pas spatiaux très différents car la position des barreaux interpolaires non seulement les fait agir sur une partie du flux magnétique s'échappant du pôle qui échappait aux écrans amortisseurs classiques, mais encore permet de leur donner des sections aussi grandes que nécessaire pour abaisser leur résistance électrique à une valeur convenable, qui peut être plus basse que celle des barreaux classiques (barreaux "polaires").

Ces barreaux interpolaires se maintiennent eux mêmes en position malgré la force centrifuge, ceci en s'appuyant sur le bec polaire c'est-à-dire sur le bord de l'épanouissement polaire des deux pôles adjacents; ils ne nécessitent donc aucune pièce de support, ce qui permet de les disposer au voisinage immédiat de l'entrefer (certaines parties de l'amortisseur pouvant même être dans l'entrefer).

Ceci permet en particulier d'obtenir un faible effet pelliculaire (en anglais "skin effect") et donc d'intercepter les harmoniques à haute fréquence.

Il convient de noter que cet écran amortisseur interpolaire, normalement associé à l'écran amortisseur polaire classique, peut également se substituer à ce dernier, le rotor n'ayant alors plus qu'une seule cage amortisseur constituée d'après la présente invention.

A l'aide des figures schématiques ci-jointes, on va décrire ci-après, à titre non limitatif, comment l'invention peut être mise en oeuvre. Lorsqu'un même élément est représenté sur plusieurs figures il y est désigné par le même signe de référence.

La figure 1 représente une vue partielle d'un rotor selon un premier mode de réalisation de l'invention, en coupe par un plan perpendiculaire à l'axe de ce rotor.

La figure 2 représente une vue de dessus d'une extrémité du rotor de la figure 1, le plan de la figure étant parallèle à l'axe du rotor.

La figure 3 représente une vue partielle d'un rotor selon un deuxième mode de réalisation de l'invention, en coupe par un plan perpendiculaire à l'axe de ce rotor.

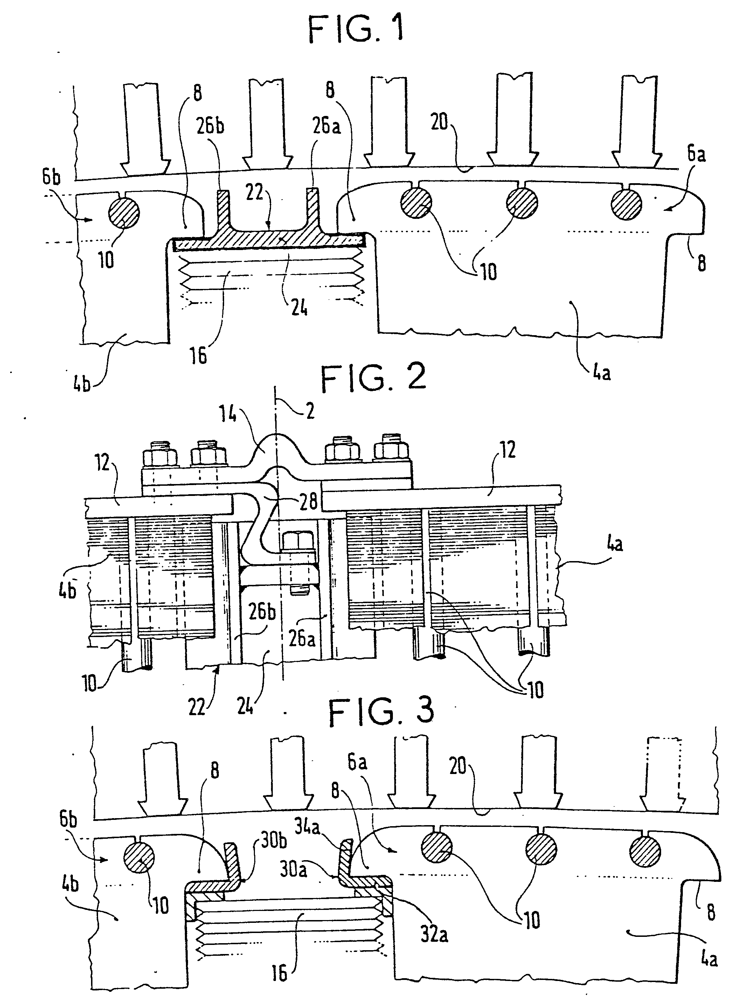

Un rotor selon l'invention tourne autour d'un axe 2 non visible sur la figure 1, mais seulement sur la figure 2 où il est dans le prolongement de l'axe longitudinal d'un intervalle interpolaire. Le mot "longitudinal" désigne ici les directions parallèles à cet axe et le mot "radial" les directions rencontrant cet axe à angle droit, le mot "angulaire" désignant les déplacements résultant d'une rotation autour de cet axe. Sur les figures on a représenté seulement deux pôles saillants consécutifs faisant partie du circuit magnétique de ce rotor. Les noyaux de ces pôles sont représentés en 4a et 4b, et leurs épanouissements polaires en 6a et 6b. Ces épanouissements comportent des bords 8 débordant angulairement par rapport aux noyaux.

Des barreaux amortisseurs classiques 10, appelés ici "polaires" sont constitués de cuivre et sont disposés dans ces épanouissements. Leurs extrémités sont connectées à des anneaux conducteurs coaxiaux au rotor destinés à former un écran amortisseur du type "cage d'écureuil". Ces anneaux sont constitués de segments polaires 12 connectés les uns aux autres par des connecteurs souples 14 constitués de bandes de cuivre. Les encoches formées par les intervalles entre noyaux polaires sont occupées par des enroulements excitateurs 16. Ce rotor tourne dans un stator 20.

Selon un premier mode de réalisation de l'invention un barreau interpolaire 22, constitué d'un métal bon conducteur non magnétique (cuivre, aluminium) est disposé dans chaque intervalle entre pôles du rotor. Ce barreau comporte une semelle 24 appuyée contre les faces intérieures des bords 8, et isolée partiellement pour éviter de créer tout contact électrique entre les pôles et l'enroulement excitateur. Le barreau interpolaire comporte en outre deux ailes 26a et 26b faisant saillie sur la semelle radialement vers l'extérieur et disposées au contact ou à proximité des épanouissements 6a et 6b, respectivement, de manière que la distance entre les deux ailes soit supérieure à celle entre les ailes et les épanouissements. Ces ailes s'étendent radialement, aussi loin que les épanouissements polaires, ou tout au moins aussi loin que le milieu de l'épaisseur radiale de ces épanouissements. La semelle peut être éventuellement constituée d'un matériau non magnétique plus résistant mécaniquement que celui des ailes et moins bon conducteur électrique.

Les ailes peuvent être facilement fabriquées avec une extension radiale aussi grande que nécessaire. Elles peuvent par exemple, quoique cela ne soit pas représenté, occuper toute l'étendue radiale des épanouissements polaires. Elles peuvent même dans certains cas, s'étendre radialement au delà de ces épanouissements polaires en pénétrant alors dans l'entrefer.

Un connecteur souple 28 connecte les deux extrémités de chaque barreau interpolaire aux anneaux conducteurs formés par les segments 12 et les connecteurs 14.

D'autres modes de connexion sont évidemment possible, telle que des connexions à travers le fer des noyaux polaires, qui est feuilleté de manière à être électriquement très résistant seulement pour les courants longitudinaux.

Selon un deuxième mode de réalisation de l'invention, analogue par ailleurs au premier, il y a deux barreaux interpolaires symétriques 30a et 30b en forme d'équerre dans chaque intervalle entre pôles. Chacun comporte une semelle telle que 32a soudée sur la face intérieure du bord 8 de l'un des épanouissements polaires, et une aile telle que 34a remontant vers l'extérieur le long de ce bord.

L'épaisseur des ailes peut être par exemple de 4 mm, celle des semelles étant par exemple de 4 mm, ceci pour un groupe bulbe dont le rotor tourne à 75 tours par minute, présente un diamètre de 5,058 m, et comporte 80 pôles avec un intervalle libre de 54 mm entre les bords de deux épanouissements polaires voisins.

## Revendications

1. Rotor à écran amortisseur pour alternateur à pôles saillants, ce rotor comportant:
    — un axe de rotation longitudinal (2),
    — un circuit magnétique formant des pôles saillant radialement vers l'extérieur, s'étendant longitudinalement, et répartis angulairement autour de l'axe, chaque pôle comportant un noyau (4a, 4b) polaire et se terminant vers l'extérieur par un épanouissement polaire (6a, 6b) dont les bords (8) débordent angulairement de part et d'autre des noyaux polaires,
    — des enroulements excitateurs (16) autour des noyaux polaires,
    — des barreaux amortisseurs (10, 22) constitués d'un matériau bon conducteur électrique et s'étendant longitudinalement, sans discontinuité sur toute la longueur des pôles, certains de ces barreaux étant des barreaux amortisseurs interpolaires disposés entre les pôles,
    — deux anneaux conducteurs (12, 14) disposés coaxialement au rotor aux deux extrémités de celui-ci et connectés électriquement aux deux extrémités de chacun des barreaux amortisseurs pour constituer avec ces barreaux un écran amortisseur du type cage d'écureuil,
    — ce rotor étant caractérisé par le fait que les barreaux interpolaires (22) comportent
    — des semelles (24, 32a) s'appuyant contre les faces intérieurs des bords (8) des épanouissements polaires (6a, 6b)
    — et des ailes (26a, 26b, 34a) en continuité avec les semelles et s'étendant sur plus de la moitié de l'intervalle radial occupé par les épanouissements polaires voisins (6a, 6b).

2. Rotor selon la revendication 1, caractérisé par le fait qu'il comporte un seul barreau interpolaire (22) dans chaque intervalle entre deux pôles voisins, ce barreau comportant une semelle (24) s'appuyant sur les faces intérieures des bords (8) des deux épanouissements polaires (6a, 6b) de ces deux pôles et au moins une aile (26a) formant saillie radiale vers l'extérieur sur cette semelle.

3. Rotor selon la revendication 2, caractérisé par le fait que chaque barreau (22) comporte deux dites ailes (26a, 26b) à proximité des deux épanouissements polaires (6a, 6b), la distance entre les deux ailes étant supérieure à la distance entre chaque aile et l'épanouissement polaire voisin.

4. Rotor selon la revendication 1, caractérisé par le fait qu'il comporte deux barreaux interpolaires (30a, 30b) dans chaque intervalle entre deux pôles consecutifs, ces barreaux s'étendant chacun le long d'un des deux côtés de cet intervalle, et présentant en section une forme équerre, une branche de l'équerre étant une semelle (32a) fixée sur la face intérieur du bord de l'épanouissement polaire (6a) le plus proche, l'autre branche de l'équerre étant une aile (34a) formant saillie radiale vers l'extérieur sur cette semelle dans l'intervalle entre les épanouissements polaires (6a, 6b).

## Patentansprüche

1. Rotor mit Dämpferschirm für eine Wechselstromsynchronmaschine mit ausgeprägten Polen, wobei dieser Rotor aufweist:
— eine Rotationslängsachse (2),
— einen Magnetkreis, der Pole bildet, die radial nach außen vorstehen, sich in Längsrichtung erstrecken und winkelmäßig rund um die Achse verteilt sind, wobei jeder Pol einen Polkern (4a, 4b) aufweist und nach außen hin in einem Polschuh (6a, 6b) endet, dessen Ränder (8) winkelmäßig auf beiden Seiten über die Polkerne überstehen,
— Erregerwicklungen (16) um die Polkerne,
— Dämpferstäbe (10, 22), die aus einem elektrisch gut leitenden Material bestehen und sich in Längsrichtung ohne Unterbrechung über die ganze Länge der Pole erstrecken, wobei gewisse dieser Stäbe Zwischenpolstäbe sind, die zwischen den Polen angeordnet sind,
— zwei Leitringe (12, 14), die koaxial zum Rotor an dessen beiden Enden angeordnet sind und elektrisch mit den beiden Enden jedes der Dämpferstäbe verbunden sind, um mit diesen Stäben einen Dämpferschirm vom Käfigtyp zu bilden,
— wobei dieser Rotor dadurch gekennzeichnet ist, daß die Zwischenpolstäbe (22)
— Sohlen (24, 32a), die sich gegen die Innenflächen der Ränder (8) der Polschuhe (6a, 6b) abstützen,
— und Flügel (26a, 26b, 34a) aufweisen, die mit den Sohlen ein Bauteil bilden und sich über mehr als die Hälfte des radialen Zwischenraums erstrecken, der von den benachbarten Polschuhen (6a, 6b) eingenommen wird.

2. Rotor nach Anspruch 1, dadurch gekennzeichnet, daß er einen einzigen Zwischenpolstab (22) in jedem Zwischenraum zwischen zwei benachbarten Polen aufweist, wobei dieser Stab eine Sohle (24), die sich auf den Innenflächen der Ränder (8) der beiden Polschuhe (6a, 6b) abstützt, und mindestens einen Flügel (26a) aufweist, der einen radialen Vorsprung nach außen auf dieser Sohle bildet.

3. Rotor nach Anspruch 2, dadurch gekennzeichnet, daß jeder Stab (22) zwei Flügel (26a, 26b) in der Nähe der beiden Polschuhe (6a, 6b) aufweist, wobei der Abstand zwischen den beiden Flügeln größer ist als der Abstand zwischen jedem Flügel und dem benachbarten Polschuh.

4. Rotor nach Anspruch 1, dadurch gekennzeichnet, daß er in jedem Zwischenraum zwischen zwei aufeinanderfolgenden Polen zwei Zwischenpolstäbe (30a, 30b) aufweist, die sich je entlang einer der beiden Seiten dieses Zwischenraums erstrecken und im Schnitt eine Winkelform aufweisen, wobei ein Schenkel des Winkels eine Sohle (32a), die an der Innenfläche des nächstgelegenen Polschuhrands (6a) befestigt ist und der andere Schenkel des Winkels ein Flügel (34a) ist, der auf dieser Sohle im Zwischenraum zwischen den Polschuhen (6a, 6b) einen radialen Vorsprung nach außen bildet.

## Claims

1. A rotor with a damper screen for an alternator with projecting poles, said rotor including:
— a longitudinal rotation axis (2),
— a magnetic circuit forming poles, which project radially outwardly, extend longitudinally and are spaced out angularly about the rotation axis, each pole including a polar core (4a, 4b) and ending outwardly in a projecting pole piece (6a, 6b) whose edges project angularly on either side of the polar cores,
— excitation windings (16) positioned around the polar cores,
— damper bars (10, 22) formed of a good electrical conductor and extending longitudinally without discontinuity along the whole length of the poles, some of these bars being interpolar damper bars disposed between the poles,
— two conductor rings (12, 14) disposed coaxially with the rotor at respective ends thereof and electrically connected to respective ends of each damper bar to form with these bars a damper screen of the squirrel cage type,
— this rotor being characterized in that the interpolar bars (22) include
— shoes (24, 32a) which press against the inside surfaces of the edges (8) of the projecting pole pieces (6a, 6b)
— and wings (26a, 26b, 34a) integral with the shoes and extending over more than half the radial gap occupied by the neighbouring projecting pole pieces (6a, 6b).

2. A rotor according to claim 1, characterized in that it comprises a single interpolar bar (22) in each interval between two neighbouring poles, said interpolar bar having a shoe (24) which presses against the inside surfaces of the edges (8) of the two projecting pole pieces (6a, 6b) of these two poles and at least one wing (26a) forming a radial outward projection on said shoe.

3. A rotor according to claim 2, characterized in that each bar (22) includes two such wings (26a, 26b) near the two projecting pole pieces (6a, 6b), the distance between the two wings being greater than the distance between each wing and the neighbouring projecting pole piece.

4. A rotor according to claim 1, characterized in that it includes two interpolar bars (30a, 30b) in each gap between two consecutive poles, said bars each extending along one side of said gap and having a cross-section in the form of an angle bar, one of whose flanges is a shoe (32a) fixed in the inner surface of the edge of the nearest projecting pole piece (6a) and the other flange of the angle bar being a wing (34a) which forms a radially outwardly projecting part on said shoe in the gap between the projecting pole pieces (6a, 6b).

# FIG. 1

# FIG. 2

# FIG. 3